**Europäisches Patentamt**

**European Patent Office**

**Office européen des brevets**

(19)

(11) Veröffentlichungsnummer: **0 193 953**
**A1**

# (12) EUROPÄISCHE PATENTANMELDUNG

(21) Anmeldenummer: **86102958.5**

(22) Anmeldetag: **06.03.86**

(51) Int. Cl.⁴: **H04B 7/08**

(30) Priorität: **08.03.85 DE 3508284**

(43) Veröffentlichungstag der Anmeldung:
**10.09.86 Patentblatt 86/37**

(84) Benannte Vertragsstaaten:
**AT CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Gobert, Jean, Dr.-Ing. Dipl.-Ing.**
**Am Wiesenhang 32**
**D-8000 München 70(DE)**

(54) **Diversity-Empfängeranordnung.**

(57) Bei der Übertragung von Informationen über eine Funkstrecke muß infolge der Überlagerung verschiedener Funkfelder mit Fadings gerechnet werden, durch die die Übertragungseigenschaften verschlechtert werden. Um diesen Fadings entgegenzuwirken, wird von verschiedenen Diversity-Techniken Gebrauch gemacht. Diversity-Empfängeranordnungen, bei denen das ankommende Signal über zwei Antennen (A1, A2) gleichzeitig empfangen wird und dann diese beiden Signale im Sinne der gewünschten Empfangsverbesserung über eine Koppelanordnung zu einem Summen-und einem Differenzsignal zusammengefaßt werden, bedingen einen relativ niedrigen Aufwand und machen von einem Phasenregelkreis Gebrauch, für den die Nullpunktsteuerung des Differenzsignals das Regelkriterium abgibt. Um eine solche Diversity-Empfängeranordnung auch für ihren Einsatz bei Anwendung eines Frequenzsprungbetriebs geeignet zu machen, wird vorgeschlagen, die Phasendifferenz der empfangenen Signale in beiden Signalwegen auszuregeln und hierbei das Regelkriterium über einen Phasenvergleicher (PD) zu gewinnen.

FIG 1

EP 0 193 953 A1

Diversity-Empfängeranordnung

## Technisches Gebiet

Die Erfindung bezieht sich auf eine Diversity-Empfängeranordnung mit zwei Signalwegen für eine einen großen Frequenzbandbereich aufweisende Funkverbindung, bei der jeder Signalweg eingangsseitig eine Antenne mit nachgeschaltetem Zwischenfrequenzumsetzer aufweist und ausgangsseitig mit einem der beiden Signaleingänge einer Koppelanordnung in Verbindung steht, bei der die Koppelanordnung einen Summensignalausgang und einen Differenzsignalausgang aufweist, denen jeweils ein Empfänger mit seinem Signaleingang angeschaltet ist und bei der im einen Signalweg zwischen der Koppelanordnung und dem Zwischenfrequenzumsetzer ein Phasendrehglied angeordnet ist.

## Zugrundeliegender Stand der Technik

Eine Diversity-Empfängeranordnung dieser Art ist durch die Literaturstelle EP 0 023 948 A1 bekannt. Mit ihrer Hilfe ist es möglich, die bei überlagerten Funkfeldern auftretenden Fadings hinsichtlich ihres Einflusses auf die Übertragungseigenschaften wenigstens teilweise zu kompensieren. Die hier verwendete Koppelanordnung gibt die Möglichkeit, das am Summensignalausgang auftretende Summensignal dadurch zu optimieren, daß das am Differenzsignalausgang auftretende Differenzsignal als Einstellkriterium für die Stellgröße eines in einem der beiden Signalwege angeordneten Phasendrehgliedes ausgenutzt wird. Auf diese Weise sind im Mittel ein Gewinn von 6 bis 10 dB gegenüber einem Signalempfang mit nur einer Antenne zu erzielen. Die relativ langsame Regelung für die Optimierung des am Summensignalausgang auftretenden Summensignals läßt jedoch keinen Empfangsbetrieb zu, bei dem schnell von einer Empfangsfrequenz auf eine andere umgeschaltet werden muß.

## Offenbarung der Erfindung

Der Erfindung liegt die Aufgabe zugrunde, für eine Diversity-Empfangsanordnung der einleitend beschriebenen Art eine weitere Lösung anzugeben, die eine Optimierung des am Summensignalausgang der Koppelanordnung auftretenden Summensignals in Abhängigkeit der Einstellung eines Phasendrehgliedes bei extrem kurzer Einschwingzeit des Regelkreises ermöglicht.

Diese Aufgabe wird gemäß der Erfindung durch die im Patentanspruch 1 angegebenen Merkmale gelöst.

Der Erfindung liegt die wesentliche Erkenntnis zugrunde, daß die Optimierung des Summensignals über die Einstellung eines Phasendrehgliedes in einem der beiden eingangsseitigen Signalwege in außerordentlich vorteilhafter Weise mit sehr guter Annäherung auch dadurch herbeigeführt werden kann, daß als Regelkriterium die Phasendifferenz Null zwischen den beiden Zwischenfrequenzsignalen an beiden Signaleingängen der Koppelanordnung verwendet wird. Dieses mit Hilfe eines Phasenvergleichers ausgewertete Kriterium liefert das gewünschte Einstellergebnis für das Phasendrehglied durch eine einzige Messung, d. h. die Einstellung des Phasendrehgliedes wird nicht, wie bei der bekannten Nullpunktregelung in einem eine größere Schrittanzahl aufweisenden Iterationsprozeß im Sinne einer mit jedem Schritt besseren Annäherung, sondern sofort erreicht. Die Einschwingzeit des Regelvorganges läßt sich dadurch mit der herkömmlichen Technologie auf unter 1 μs begrenzen, so daß eine solche Diversity-Empfängeranordnung sich sogar für die Durchführung eines schnellen Frequenzsprungbetriebes eignet.

Besonders günstig gestalten sich in diesem Zusammenhang die Verhältnisse, wenn die beiden Antennen gegenseitig einen möglichst geringen Abstand von beispielsweise einer halben Wellenlänge der Mittenfrequenz des Frequenzbandbereiches der Funkverbindung aufweisen. Dadurch wird nämlich gewährleistet, daß die Pegel der empfangenen Signale in beiden Signalzweigen an den Signaleingängen der Koppelanordnung stets wenigstens annähernd gleich groß sind.

Ist diese Voraussetzung nicht gegeben, weisen also die beiden Antennen, die dabei auch von unterschiedlicher Art sein können, einen größeren gegenseitigen Abstand von beispielweise mehreren Wellenlängen der Mittenfrequenz des Frequenzbandbereiches der Funkverbindung auf, dann ist es zweckmäßig, in beiden Signalwegen im Anschluß an die Zwischenfrequenzumsetzer eine automatische Verstärkungsregeleinrichtung vorzusehen und hierbei das einstellbare Phasendrehglied im einen Signalweg auf der Ausgangsseite der automatischen Verstärkungsregeleinrichtung anzuordnen. Diese Vestärkungsregeleinrichtung ist so ausgelegt, daß sie die Pegeldifferenz der Zwischenfrequenzsignale an den Signaleingängen der Koppelanordnung in einem vorgegebenen Dynamikbereich ausregelt.

Die Einschwingzeit der Regelung dieses aus zwei voneinander abhängigen Regelschleifen bestehenden Regelkreises ist zwar größer als die Einschwingzeit der Regelung des lediglich die Einstellung des Phasendrehgliedes umfassenden Regelkreises, doch ist sie noch so groß, daß eine so gestaltete Diversity-Empfangsanordnung ebenfalls zur Durchführung eines Frequenzsprungbetriebes geeignet ist.

## Kurze Beschreibung der Zeichnung

In der Zeichnung bedeuten die der näheren Erläuterung der Erfindung dienenden Figuren

Fig. 1 das Blockschaltbild einer Diversity-Empfängeranordnung mit einem Phasenregelkreis,

Fig. 2 die schematische Darstellung der beiden Antennen des Blockschaltbildes nach Fig. 1 in der Azimutebene,

Fig. 3 das Teilblockschaltbild einer Variante der Diversity-Empfängeranordnung nach Fig. 1,

Fig. 4 ein erstes Antennenstrahlungsdiagramm zweier Antennen nach Fig. 1 und Fig. 2,

Fig. 5 ein zweites Antennenstrahlungsdiagramm für eine Antennenanordnung entsprechend Fig. 1 und Fig. 2,

Fig. 6 ein die Wirkungsweise der Diversity-Empfänger anordnung nach Fig. 1 näher erläuterndes erstes Phasendiagramm,

Fig. 7 ein die Wirkungsweise der Diversity-Empfängeranordnung nach Fig. 1 näher erläuterndes zweites Phasendiagramm.

## Bester Weg zur Ausführung der Erfindung

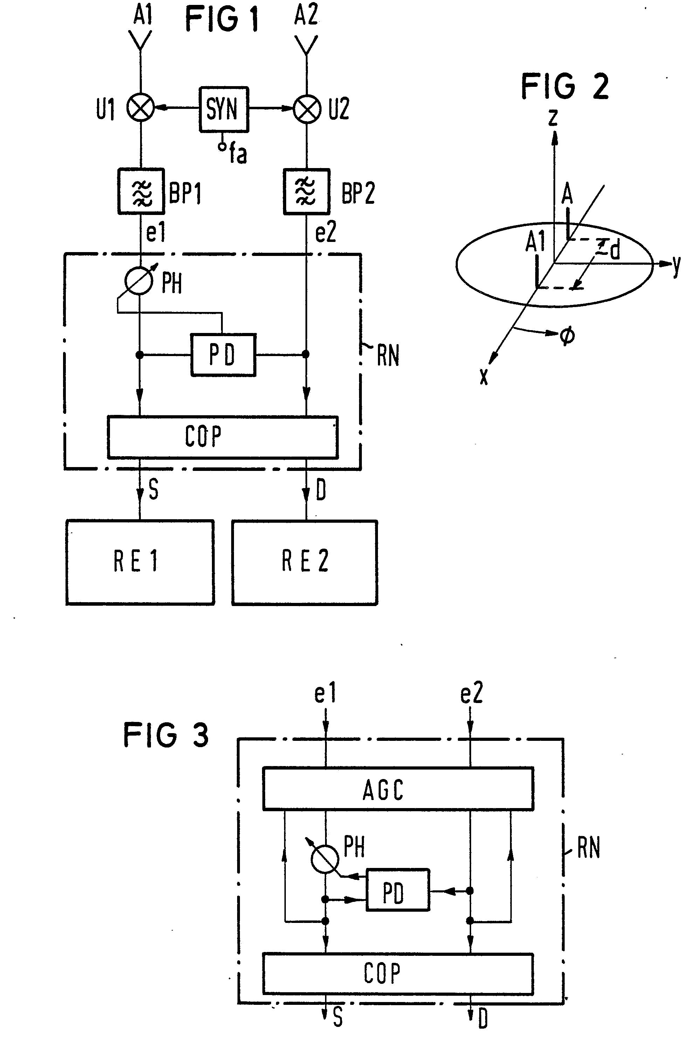

Das Blockschaltbild der Diversity-Empfängeranordnung nach Fig. 1 hat zwei Signalwege. Jeder Signalweg weist eingangsseitig eine Antenne A1 bzw. A2 auf, denen ein Zwischenfrequenzumsetzer U1 und U2 in Verbindung mit ausgangsseitigen Filtermitteln in Form von Bandpaßfiltern BP1 und BP2 nachgeschaltet sind. Die Umsetzschwingungen erhalten die beiden Umsetzer U1 und U2 von einem Synthesizer SYN, dessen Frequenzeinstellung über einen Frequenzadresseneingang fa von einem in Fig. 1 nicht näher dargestellten Adressengeber vorgenommen wird.

An die Bandpaßfilter BP1 und BP2 schließt sich ein Vierpol in Form eines Regelnetzwerkes RN an, dessen Eingänge e1 und e2 mit den Ausgängen der Bandpaßfilter BP1 und BP2 und dessen noch näher zu bezeichnende Ausgänge jeweils mit dem Eingang eines Verstärkers RE1 und RE2 verbunden sind.

Das Regelnetzwerk RN weist eingangsseitig auf seiten des Eingangs e1 ein einstellbares Phasendrehglied PH auf, das vom Steuersignalausgang eines Phasenvergleichers PD gesteuert wird. Ausgangsseitig weist das Regelnetzwerk die Koppelanordnung COP auf. Der eine Signaleingang der Koppelanordnung COP ist mit dem Ausgang des Bandpaßfilters BP1 über das Phasendrehglied PH und der andere Signaleingang unmittelbar mit dem Ausgang des Bandpaßfilters BP2 verbunden. Der Phasenvergleicher PD vergleicht über seine beiden Eingänge die Zwischenfrequenzsignale in den beiden Signalzweigen auf seiten der beiden Signaleingänge der Koppelanordnung COP und steuert in Abhängigkeit der Vergleichsergebnisse die Einstellung des Phasendrehgliedes PH so, daß die Zwischenfrequenzsignale an den Signaleingängen der Koppelanordnung COP stets gleichphasig sind.

Die Koppelanordnung COP faßt die beiden Zwischenfrequenzsignale in den beiden Signalzweigen an ihrem Summensignalausgang S zu einem Summensignal und am Differenzsignalausgang D zu einem Differenzsignal zusammen. Der Empfänger RE1 empfängt hierbei das Summensignal und der Empfänger RE2 das Differenzsignal, so daß beide Signale je nach Bedarf weiter verarbeitet oder ausgewertet werden können.

Ist der Abstand d zwischen den Antennen A1 und A2 entsprechend ihrer Darstellung in der Azimutebene X,Y nach Fig. 2 in der Größenordnung einer halben Wellenlänge der Mittenfrequenz des Frequenzbandbereiches der Funkverbindung, für die die Diversity-Empfängeranordnung nach Fig.1 eingesetzt wird, dann ist davon auszugehen, daß beide Antennen A1 und A2 im allgemeinen das zu empfangende Signal mit der gleichen Stärke empfangen. Dies stellt eine optimale Empfangsbedingung dar, da die Gleichphasigkeit und der gleiche Pegel der Zwischenfrequenzsignale an den beiden Signaleingängen der Koppelanordnung COP am Summensignalausgang S ein maximales Summensignal und am Differenzsignalausgang D ein vernachlässigbar kleines Differenzsignal ergeben.

Wie schon darauf hingewiesen wurde, ist der Phasenregelkreis sehr schnell, so daß diese Anordnung auch für die Anwendung eines sehr schnellen Frequenzsprungverfahrens geeignet ist. Bei den Anwendungsfällen, in denen die beiden Antennen A1 und A2 nicht auf einem gemeinsamen Mast angeordnet werden können, sondern räumlich in einer größeren Entfernung voneinander aufgestellt werden müssen, läßt es sich nicht vermeiden, daß die Empfangsfeldstärke des zu empfangenden Signals an den beiden Antennen A1 und A2 im allgemeinen unterschiedlich groß

ist. Um auch hier möglichst optimale Empfangsbedingungen für eine solche Diversity-Empfängeranordnung zu schaffen, kann, wie das die Variante des Regelnetzwerkes RN nach Fig. 3 zeigt, der Regelkreis mit dem Phasendrehglied PH und dem Phasenvergleicher PD zusätzlich durch eine Verstärkungsregeleinrichtung AGC erweitert werden.

Die Verstärkungsregeleinrichtung AGC ist auf der Eingangsseite des Regelnetzwerkes RN angeordnet, also vor dem Phasendrehglied PH in Signalflußrichtung. Auf diese Weise ist gewährleistet, daß eine in Abhängigkeit der Verstärkungsregelung auftretende Phasendifferenz der Zwischenfrequenzsignale an den beiden Signaleingängen der Koppelanordnung COP über den Phasenregelkreis sofort ausgeglichen wird. Die Verstärkungsregeleinrichtung AGC vergleicht die Signalpegel an den Signaleingängen der Koppelanordnung COP miteinander und regelt die Verstärkung in beiden Signalzweigen so, daß die Pegel der Zwischenfrequenzsignale an den Signaleingängen der Koppelanordnung COP in einem vorgegebenen Dynamikbereich wenigstens annähernd gleich groß sind. Damit sind dann gleiche Verhältnisse wie bei der Antennenanordnung geschaffen, bei der der Abstand d zwischen den beiden Antennen A1 und A2 in der Größenordnung einer halben Wellenlänge der Mittenfrequenz des Frequenzbandbereiches der Funkverbindung liegt.

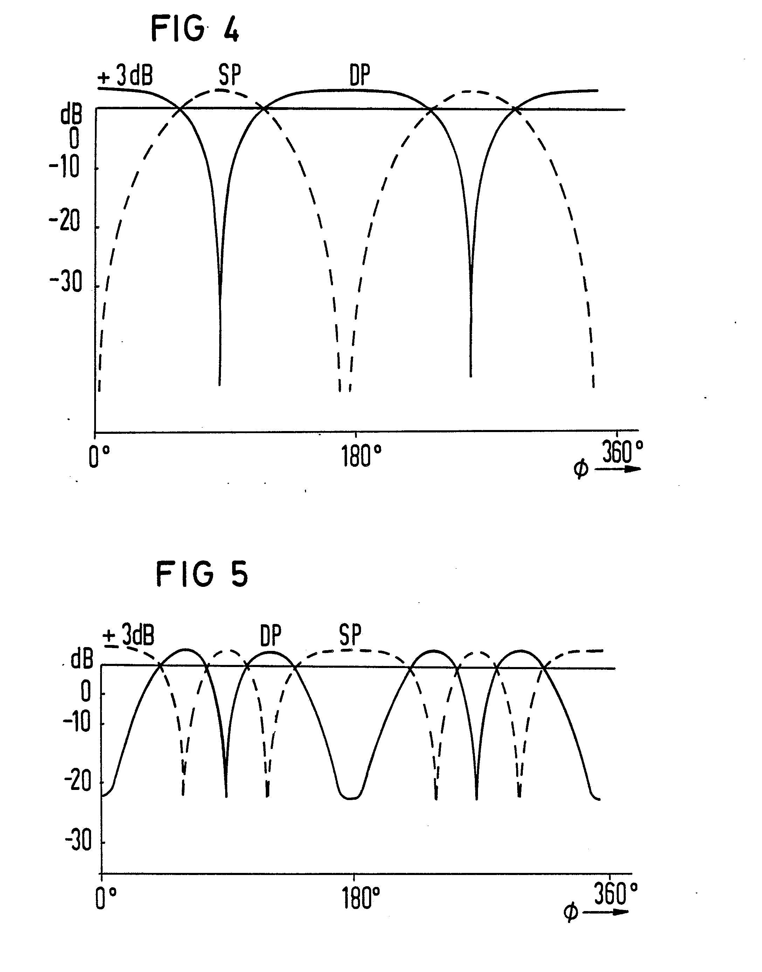

Im Strahlungsdiagramm der Fig. 4 sind über den Azimutwinkel $\emptyset$ zwischen 0 und 360° das Strahlungsdiagramm des Summensignals SP und das Strahlungsdiagramm des Differenzsignals DP für den Fall aufgetragen, daß der Abstand d zwischen den Antennen A1 und A2 so klein ist, daß von gleichen Zwischenfrequenzsignalpegeln an den Signaleingängen der Koppelanordnung COP ausgegangen werden kann. Eine Verstärkungsregelung der Zwischenfrequenzsignale entsprechend Fig. 3 ist hier nicht vorgesehen. Wie die Strahlungsdiagramme klar erkennen lassen, hat das Strahlungsdiagramm des Summensignals SP ein Maximum, wenn das Strahlungsdiagramm des Differenzsignals DP ein scharfes Minimum aufweist und umgekehrt.

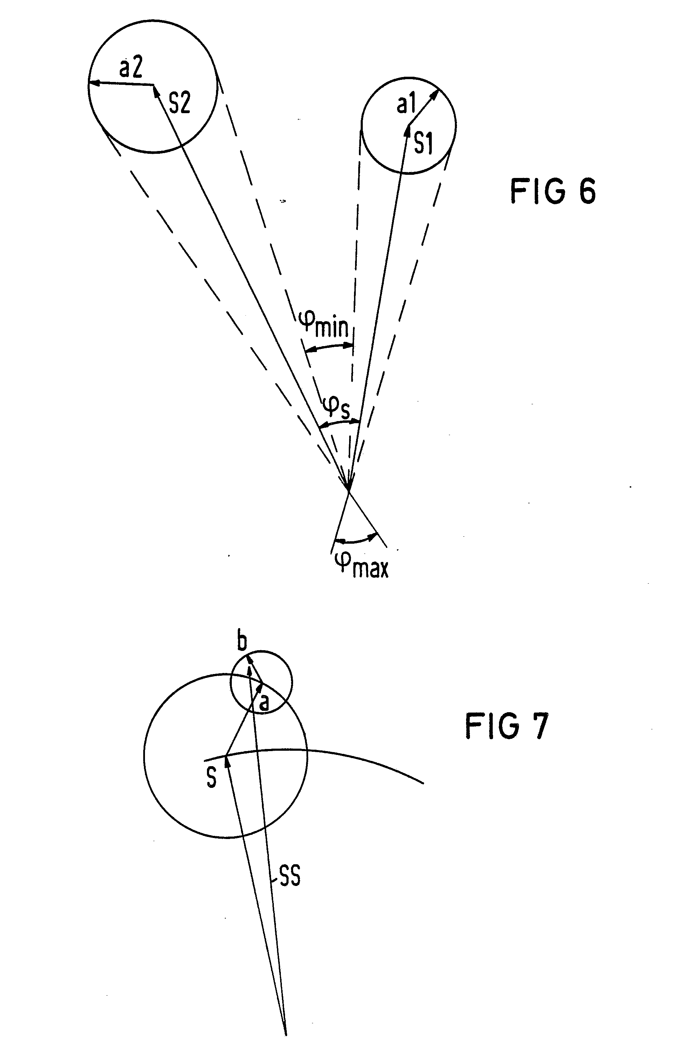

Die Strahlungsdiagramme nach Fig. 5 zeigen den Verlauf des Strahlungsdiagramms des Summensignals SP und den Verlauf des Strahlungsdiagramms des Differenzsignals DP für den Fall, daß der Abstand d nach Fig. 1 zwischen den beiden Antennen A1 und A2 gleich der zweifachen Wellenlänge der Mittenfrequenz des Frequenzbandbereiches der Funkverbindung ist und der Pegel des Zwischenfrequenzsignals am einen Signaleingang der Koppelanordnung um 10% niedriger ist als der Pegel des Zwischenfrequenzsignals an deren anderen Signaleingang. Wie sich zeigt, ergeben sich zwischen dem Summensignal SP im Maximum des Strahlungsdiagramms und dem Differenzsignal DP im Minimum des Strahlungsdiagramms ein Abstand in der Größenordnung von 25 dB. Dies macht deutlich, daß auf eine zusätzliche Verstärkungsregelung verzichtet werden kann, solange der Pegelunterschied der Zwischenfrequenzsignale an den beiden Signaleingängen der Koppelanordnung 10% nicht wesentlich überschreitet.

Im allgemeinen kann im praktischen Betrieb einer Funkverbindung nicht angenommen werden, daß das gewünschte Signal störungsfrei empfangen wird. Es ist vielmehr davon auszugehen, daß dem empfangenen Nutzsignal ein Störsignal überlagert ist. Ein solcher Fall ist im Phasendiagramm der Fig. 6 dargestellt. Das an den Antennen A1 und A2 empfangene Nutzsignal ist hier von den Nutzungssignalvektoren S1 und S2 dargestellt, denen jeweils ein Störsignal in Gestalt der Störsignalvektoren a1 und a2 überlagert ist. Der Phasenunterschied der Signale an den Antennen A1 und A2 weist den Phasenwinkel $\phi$s auf, der hierbei infolge des zu dem Nutzsignal nicht korrelierten Störsignals periodisch zwischen $\phi$Min und $\phi$Max schwankt.

Da der Phasenregelkreis sehr schnell ist, wird auch eine solche periodische Phasenschwankung in der Regel weitestgehend unterdrückt. Wie das Phasendiagramm nach Fig. 6 erkennen läßt, verursacht das dem Nutzsignal überlagerte Störsignal zusätzlich eine periodische Schwankung der Pegeldifferenz zwischen beiden Zwischenfrequenzsignalen an den Signaleingängen der Koppelanordnung. Diese wird nicht ausgeglichen, sofern nicht von einer zusätzlichen Verstärkungsregelung entsprechend Fig. 3 Gebrauch gemacht wird.

Wie das Strahlungsdiagramm der Fig. 5 zeigt,, können durch solche überlagerten Störungen hervorgerufene Pegeldifferenzen ohne weiteres zugelassen werd, wenn sie in der Größenordnung von etwa 10% bleiben. Die hier betrachteten Zusammenhänge ändern sich nicht wesentlich, wenn, wie das ein entsprechendes Phasendiagramm nach Fig. 7 andeutet, dem Nutzsignal S zwei Störungen a und b überlagert sind, die beide zum Nutzsignal unkorreliert und auch untereinander unkorreliert sind. Die Spitze des Summenvektors SS beschreibt hier lediglich eine etwas kompliziertere Bahn um die Spitze des Nutzsignalvektors.

Die Figuren 6 und 7 verdeutlichen auch, daß die Phasen und, sofern eine Verstärkungsregelung zusätzlich angewendet wird, auch die Verstärkungsregelung sich jeweils auf das stärkste Signal einstellen werden. Ist daher das Störsignal wesentlich größer als das zu empfangende Nutzsignal, dann tritt am Summensignalausgang als optimiertes Signal das Summensignal des Störers auf. In diesem Fall kann dann in außerordentlich vorteilhafter Weise das Nutzsignal am Differenzausgang D der Koppelanordnung COP abgenommen werden, weil hier dieses Störsignal dann optimal unterdrückt ist.

Gewerbliche Verwertbarkeit

Die beschriebene Diversity-Empfängeranordnung ist mit Vorteil überall da einsetzbar, wo für die Übertragung ein breites Frequenzband verfügbar ist und bei Bedarf zur Erhöhung einer Störresistenz gegen gezielte Störung von einem Frequenzsprungbetrieb Gebrauch gemacht wird. Diese Voraussetzungen sind insbesondere bei taktischen Funknetzen gegeben.

**Ansprüche**

1. Diversity-Empfängeranordnung mit zwei Signalwegen für eine einen großen Frequenzbandbereich aufweisende Funkverbindung, bei der jeder Signalweg eingangsseitig eine Antenne mit nachgeschaltetem Zwischenfrequenzumsetzer aufweist und ausgangsseitig mit einem der beiden Signaleingänge einer Koppelanordnung in Verbindung steht, bei der die Koppelanordnung einen Summensignalausgang und einen Differenzsignalausgang aufweist, denen jeweils ein Empfänger mit seinem Signaleingang angeschaltet ist und bei der im einen Signalweg zwischen der Koppelanordnung und dem Zwischenfrequenzumsetzer ein Phasendrehglied angeordnet ist,

**dadurch gekennzeichnet,**

daß zur Durchführung eines Frequenzsprungbetriebes das einstellbare Phasendrehglied (PH) über einen Phasenvergleicher (PD) angesteuert ist, der die Gleichphasigkeit der Zwischenfrequenzsignale an den beiden Signaleingängen der Koppelanordnung (COP) überwacht und bei Feststellen einer Phasendifferenz zwischen den beiden Zwischenfrequenzsignalen die Einstellung des Phasendrehgliedes entsprechend korrigiert.

2. Diversity-Empfänger nach Anspruch 1,

**dadurch gekennzeichnet,**

daß die beiden Antennen (A1,A2) gegenseitig einen möglichst geringen Abstand (d) von beispielsweise einer halben Wellenlänge der Mittenfrequenz des Frequenzbandbereiches der Funkverbindung aufweisen.

3. Diversity-Empfängeranordnung nach Anspruch 1,

**dadurch gekennzeichnet,**

daß bei größerem gegenseitigen Abstand (d) der beiden Antennen (A1,A2) von beispielsweise mehreren Wellenlängen der Mittenfrequenz des Frequenzbandbereiches der Funkverbindung beide Signalwege im Anschluß an die Zwischenfrequenzumsetzer (U1, U2) eine automatische Verstärkungsregeleinrichtung (AGC) aufweisen und hierbei das einstellbare Phasendrehglied (PH) im einen Signalweg auf der Ausgangsseite der automatischen Verstärkungsregeleinrichtung angeordnet ist und daß diese Verstärkungsregeleinrichtung die Pegeldifferenz der Zwischenfrequenzsignale an den Signaleingängen der Koppelanordnung (COP) in einem vorgegebenen Dynamikbereich ausregelt.

# FIG 1

A1  A2

U1  SYN  U2
fa

BP1  BP2

e1  e2

PH

PD  RN

COP

S  D

RE 1  RE 2

# FIG 2

z

A

A1  d

y

φ

x

# FIG 3

e1  e2

AGC  RN

PH

PD

COP

S  D

0 193 953

# FIG 4

# FIG 5

FIG 6

FIG 7

| | **EINSCHLÄGIGE DOKUMENTE** | | EP 86102958.5 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) | |
| D,Y | EP - A1 - 0 023 948 (LICENTIA)<br>* Fig. 2 *<br><br>-- | 1,3 | H 04 B 7/08 | |
| Y | PATENT ABSTRACTS OF JAPAN, unexamined applications, Sektion E, Band 4, Nr. 126, 5. September 1980<br>THE PATENT OFFICE JAPANESE GOVERNMENT<br>Seite 157 E 24<br>* Kokai-Nr. 55-80 932 (FUJITSU) *<br><br>-- | 1,3 | | |
| A | US - A - 4 079 318 (KINOSHITA)<br>* Fig. 2; Zusammenfassung *<br><br>---- | 1,3 | | |
| | | | **RECHERCHIERTE SACHGEBIETE (Int. Cl.4)**<br><br>H 04 B 7/00 | |

Der vorliegende Recherchenbericht wurde für alle Patentansprüche erstellt.

| Recherchenort | Abschlußdatum der Recherche | Prüfer |
|---|---|---|
| WIEN | 26-05-1986 | DRÖSCHER |